Europäisches Patentamt

European Patent Office

Office européen des brevets

(11) Numéro de publication: **0 220 971**
**A1**

## (12) DEMANDE DE BREVET EUROPEEN

(21) Numéro de dépôt: 86402021.9

(22) Date de dépôt: 16.09.86

(51) Int. Cl.⁴: **F 24 J 2/36**
F 24 J 2/14, F 24 J 2/34,
F 24 J 2/48

(30) Priorité: 20.09.85 FR 8513997

(43) Date de publication de la demande:
06.05.87 Bulletin 87/19

(84) Etats contractants désignés: **DE GB IT**

(71) Demandeur: **TOTAL ENERGIE DEVELOPPEMENT,
Société Anonyme dite
84 rue de Villiers
F-92538 Levallois-Perret Cedex (FR)**

(72) Inventeur: **Boissonnet, Francisque
4, Place Sathonay
F-69001 Lyon (FR)**

**Mao, Gérard
16, Résidence les Varennes
F-01600 Trevoux Massieux (FR)**

(74) Mandataire: **Jolly, Jean-Pierre et al
Cabinet BROT et JOLLY 83, rue d'Amsterdam
F-75008 Paris (FR)**

(54) **Capteur-stockeur d'énergie solaire enroulable.**

(57) L'invention concerne un capteur d'énergie solaire enroulable.

Le capteur-stockeur comprend un réflecteur (12) constitué par une première feuille rectangulaire, en une matière plastique souple dont l'une des faces est réfléchissante, une seconde feuille (14) en matière plastique souple et transparente, qui est assemblée le long de ses bords longitudinaux (16, 18) à ceux de la feuille réflectrice (12), au moins un tronçon de tube (10) étanche et enroulable, du type tube à incendie, monté axialement entre les deux feuilles (12,14) et des moyens mécaniques de mise en forme (20, 22, 34, 36) destinés à gofler l'enveloppe formée par les deux feuilles (12,14) et à supporter le tube (10) sensiblement le long d'un axe focal de la feuille réflectrice (12).

FIG.2

EP 0 220 971 A1

**Description**

Capteur-stockeur d'énergie solaire enroulable

Les installations de chauffage d'eau sanitaire par l'énergie solaire comprennent des capteurs solaires constitués généralement par des panneaux rigides de surface relativement grande, et un réservoir de stockage du fluide caloporteur, qui sont reliés entre eux par une conduite aller par laquelle le fluide relativement froid soustrait à la base du réservoir est recyclé dans les capteurs, et par une conduite retour pour ramener le fluide réchauffé dans les capteurs au réservoir. Ces installations sont montées à poste fixe sur les lieux où l'on désire produire de l'eau chaude, et elles sont définitivement scellées étant donné qu'elles ne doivent jamais être déplacées. Ceci ne constitue pas un inconvénient dans le cas du chauffage d'eau pour l'alimentation d'appareils sanitaires d'ensembles immobiliers puisque le besoin en eau chaude y est permanent.

Toutefois, dans certaines applications particulières, on a besoin de disposer d'une source d'eau chaude en des lieux variables, pendant des intervalles de temps relativement courts. C'est ainsi par exemple, que les agriculteurs doivent fréquemment nettoyer avec un jet d'eau chaude leurs machines et outils pour les débarrasser de la terre qui y adhère. Il n'est pas toujours possible d'amener les machines à proximité d'une source fixe d'eau chaude. Il n'est pas non plus rentable d'installer en permanence des capteurs solaires en chacun des points d'utilisation, compte tenu de la faible quantité d'eau qui est nécessaire en chacun de ces points.

La présente invention a pour but de proposer un capteur-stockeur d'énergie solaire qui puisse facilement être démonté, mis sous une forme compacte lorsqu'il n'est pas utilisé, en vue par exemple de son transport ou de son stockage et qui puisse être remonté rapidement en tout point désiré.

Par les brevets FR 1 319 144 et 2 406 786 et US 4 051 834, on connaît déjà des capteurs-stockeurs de ce type comprenant une première feuille réalisée en une matière plastique souple dont l'une des faces est réfléchissante, une seconde feuille réalisée en une matière plastique souple et transparente et qui est assemblée le long de ses bords longitudinaux à ceux de la feuille réflectrice, au moins un tronçon de tube étanche et déformable, par example du type tube à incendie, qui est muni à une de ses extrémités de moyens. d'obturation et de soutirage d'eau et à son autre extrémité d'un raccord permettant de le relier à une source d'eau froide sous pression, ledit tube étant monté axialement entre les deux feuilles réflectrice et transparente.

Dans tous ces capteurs-stockeurs, la mise en volume de l'enveloppe constituée par les feuilles réflectrice et transparente est obtenue en gonflant le volume intérieur de ladite enveloppe avec de l'air. Des moyens supports sont prévus pour supporter le tube et le positionner sensiblement selon l'un des axes focaux de la feuille réflectrice.

Le gonflage de l'enveloppe nécessite naturellement une source d'air comprimé, généralement onéreuse et qui en outre, doit être transportée jusque sur les lieux où le capteur-stockeur est installé. On comprend que dans le cas des applications particulières signalées précédemment, il ne soit pas toujours possible de la faire.

La présente invention remédie à ces inconvénients et propose à cet effet un capteur-stockeur du type susmentionné qui présente tous les avantages des dispositifs selon la technique antérieure signalée, et qui ne nécessite pas de source d'air comprimé pour sa mise en forme.

Le capteur-stockeur selon l'invention se caractérise en ce qu'il comprend des moyens mécaniques de mise en forme susceptibles de se déveloper en volume à l'intérieur de l'enveloppe formée par les feuilles réflectrice et transparente, par suite du remplissage du tube en eau, et d'incurver ainsi lesdites feuilles sous forme de surfaces cylindriques de section circulaire, elliptique ou parabolique, lesdits moyens de mise en forme servant également à supporter le tube at à le positionner sensiblement le long de l'un des axes focaux de la feuille réflectrice.

Avantageusement, le tube est recouvert sur sa paroi extérieure d'un revêtement noir absorbant la chaleur. Lorsque le tube est rempli d'eau, l'enveloppe est automatiquement mise en volume. Les rayons solaires qui traversent la feuille transparente atteignent le tube, soit directement, soit après réflection sur la feuille réflectrice, et réchauffent l'eau du tube par effet de serre. Un robinet sera prévu à l'extrémité de ce dernier pour l'obturation et/ou le soutirage de l'eau chaude.

Selon un premier mode de réalisation de l'invention, les moyens de mise en volume sont constitués par une pluralité des dispositifs mécaniques développables en volume, montés à intervalles réguliers le long du capteur-stockeur, selon des sections droites de ce dernier, et qui comprennent chacun une première paire de tiges rigides croisées at articulées par une de leurs extrémités, sur la feuille réflectrice au voisinage du plan de symétrie du capteur-stockeur et une seconde paire de tiges également croisées, dont deux extrémités sont articulées aux autres extrémités de la première paire de tiges, et dont les autres extrémités sont libres et s'appuient en contact glissant sur la feuille transparente, lesdites tiges formant ainsi un parallélogramme articulé à travers lequel passe le tube.

Il résulte de cette disposition que lorsque le tube est vide et donc dégonflé, il s'aplatit, de sorte que la surface réfléchissante prend une forme plate.La feuille transparente, qui n'est plus supportée, s'affaisse également contre cette dernière. Si au contraire le tube est rempli d'eau, il repousse la seconde paire de tiges vers le haut, lesquelles confèrent respectivement aux feuilles réflectrice et réfléchissante des formes bi-convexes.

Ainsi, de façon fort originale, ces tiges asservissent la mise en forme du capteur au remplissage du tube en eau, mais en même temps, en se développant, la première paire de tiges soulève le tube et le place sensiblement le long de l'un des axes focaux de la feuille réflectrice.

On comprend qu'en raison de leur souplesse, le tube et l'enveloppe peuvent être enroulés ou repliés lorsque le capteur-stockeur n'est pas utilisé. De plus, tous ces éléments sont simples, bon marché et se trouvent couramment dans le commerce. Des essais ont permis de constater qu'à performances égales, le capteur-stockeur selon l'invention est nettement moins cher que les dispositifs de stockage d'énergie solaire actuellement commercialisés.

Plusieurs modes de réalisation de l'invention seront à présent décrits en regard des dessins annexés dans lesquels:

La figure 1 est une vue en coupe transversale d'un capteur-stockeur selon un premier mode de réalisation, à l'état presque aplati;

La figure 2 est une vue en coupe du capteur-stockeur à l'état d'utilisation; et

La figure 3 montre une vue en coupe d'un capteur-stockeur à plusiers tubes.

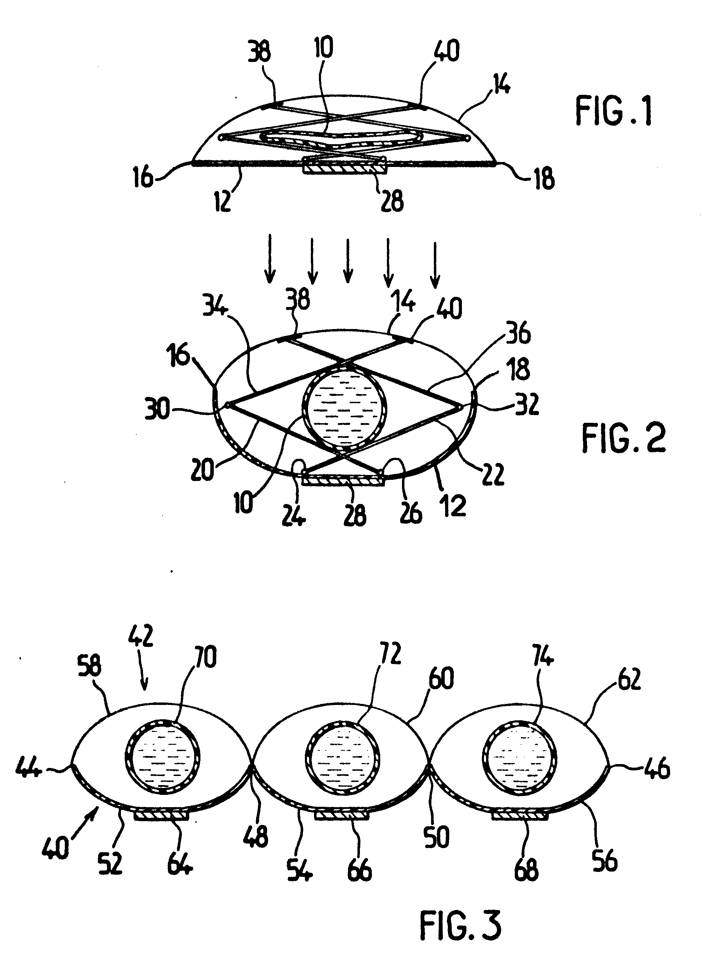

Avec référence aux figures 1 et 2, le capteur-stockeur comprend en guise de réservoir, un tronçon de tube souple et enroulable 10, par example du même type que celui utilisé par les pompiers. Le tube est obturé à l'une de ses extrémités par une paroi étanche éventuellement munie d'un robinet, non représenté, et comporte à son autre extrémité un raccord permettant de l'adapter sur une source d'eau froide sous pression. Afin de favoriser au maximum la transmission de chaleur à travers la paroi du tube, de l'extérieur vers l'intérieur, tout en réduisant autant que possible les déperditions de chaleur dans le sens inverse, le tube est réalisé de façon connue en soi en un complexe feuilleté comprenant au moins une couche extérieure de couleur noire, par example en polychlorure de vinyle noir.

Le capteur-stockeur comprend d'autre part un réflecteur souple 12 constitué par une plaque rectangulaire en matière plastique de faible épaisseur, par example en polyéthylène, dont une face a subi un traitement pour la rendre réfléchissante, et une feuille transparente et souple 14, jouant le rôle de vitrage et constituée par example par un film rectangulaire de "Téflon" ou de polychlorure de vinyle. La plaque réflectrice 12 et le vitrage 14 ont sensiblement la même longueur que le tube 10 et sont assemblés de façon étanche le long de leurs bords longitudinaux 16, 18, par tout moyen approprié, par example par thermosoudage.

Le tube 10 est logé axialement à l'intérieur du passage défini entre la plaque réflectrice et le vitrage et repose sur une pluralité de dispositifs de centrage et de mise en volume montés à intervalles réguliers, selon des sections droites du capteur-stockeur. Les coupes des figures 1 et 2 sont faites au niveau de l'un de ces dispositifs.

Chacun des dispositifs déformables comprend une première paire de tiges 20, 22 articulées par deux de leurs extrémités 24, 26 sur un support 28 sur lequel repose la plaque réflectrice 12. Les tiges 20, 22 sont croisées et leurs autres extrémités 30, 32 sont articulées à l'une des extrémités d'une seconde paire de tiges 34, 36 qui sont également croisées et dont les extrémités libres portent des patins 38, 40 destinée à glisser sur la face interne du vitrage.

Le tube 10 traverse les passages définis entre les quatre tiges de chaque dispositif de mise en volume. Lorsque le capteur-stockeur n'est pas en service, le tube est vidé de son eau et se met à l'état aplati, comme on peut le voir sur la figure 1. Les parallélogrammes formés par les tiges 20, 22, 34, 36 de tous les dispositifs de mise en volume s'aplatissent également, de sorte que la plaque réflectrice 12 et le vitrage 14, qui ne sont plus soutenus, s'affaissent pour prendre la position montrée à la figure 1. Si le capteur doit être transporté ou stocké pendant un temps prolongé, il est alors avantageux de retirer le tube 10 et de l'enrouler à la manière d'un tube de pompier, et d'enrouler également l'ensemble de la plaque réflectrice 12 et du vitrage 14. On obtient alors deux éléments de très faible encombrement.

Pour mettre en service le capteur-stockeur, on déroule l'ensemble plaque réflectrice-vitrage et le tube 10, on introduit ce dernier à travers les passages définis entre les tiges 20, 22, 34, 36 et on branche son extrémité d'alimentation sur la source d'eau froide. Lorsque la vanne de la source est ouverture, l'eau sous pression gonfle le tube qui prend une forme cylindrique. Le tube repousse en même temps vers le haut les tiges 34, 36, lesquelles tendent le vitrage 14 et le rendent convexe. Celui-ci à son tour exerce une traction sur les bords longitudinaux de la plaque réflectrice 12 et incurvent cette dernière.

Les dimensions des différents éléments du capteur-stockeur sont calculées pour qu'à l'état gonflé, le tube se trouve supporté par les tiges 20, 22 sensiblement le long d'un axe focal de la plaque réflectrice 12.

La figure 3 montre une variante de réalisation de capteur-stockeur comportant trois unités élémentaires accolées. Ce capteur-stockeur comprend une unique plaque réflectrice 40 de longeur triple de celle de la plaque 12 et une feuille transparente 42 formant vitrage, de dimensions sensiblement égales à celles de la plaque réflectrice 40. La feuille 42 et la plaque 40 sont assemblées entre elles, par example par thermosoudage, le long de leurs bords longitudinaux extrêmes 44, 46 et le long de deux lignes longitudinales 48, 50 qui définissent sur la plaque 40 trois bandes de même largeur 52, 54, 56 et sur la feuille 42 trois bandes de même largeur 58, 60, 62. Les bandes 52, 54, 56 sont fixées par leur portion centrale sur des supports 64, 66, 68. Trois tubes 70, 72, 74 analogues à celui 10 de la figure 1 sont introduits dans les logements formés entre les bandes de réflecteurs 52, 54, 56 at les bandes de vitrage 58, 60, 62 et sont maintenus au moyen de tiges, comme dans le mode de réalisation de la figure 1, ou au moyen de ressorts.

Lorsque les tubes 70, 72, 74 sont remplis d'eau, les vitrages 58, 60, 62 se tendent, tandis que les arêtes 44, 46 48 et 50 de la plaque réflectrice se soulèvent. Les bandes 46, 48 et 50 s'incurvent, formant ainsi trois réflecteurs élémentaires. Lorsque le capteur-stockeur n'est pas utlisé, les tubes sont vidés de leur eau, et l'ensemble est enroulé.

L'invention permet ainsi de réaliser un capteur-stockeur transportable, qui peut être monté très rapidement en n'importe quel lieu souhaité à proximité d'une source d'eau, et qui peut être stocké sous un volume extrêmement réduit.

## Revendications

1. Capteur-stockeur d'énergie solaire enroulable à vide, du type comprenant une première feuille (12) réalisée en une matière plastique souple dont l'une des faces est réfléchissante, une seconde feuille (14) réalisée en une matière plastique souple et transparente et qui est assemblée le long de ses bords longitudinaux (16, 19) à ceux de la feuille réflectrice, au moins un tronçon de tube (10) étanche et déformable, par exemple du type tube à incendie, qui est muni à une de ses extrémités de moyens d'obturation et de soutirage d'eau et à son autre extrémité d'un raccord permettant de le relier à une source d'eau froide sous pression, ledit tube étant monté axialement entre les deux feuilles réflectrice et transparente, caractérisé en ce qu'il comprend des moyens mécaniques de mise en forme (20, 22, 34, 36) susceptibles de se développer en volume à l'intérieur de l'enveloppe formée par les feuilles réflectrice (12) et transparente (14), par suite du remplissage du tube (10) en eau, et d'incurver ainsi lesdites feuilles sous forme de surfaces cylindriques, de section circulaire, elliptique ou parabolique, lesdits moyens de mise en forme servant également à supporter le tube et à le positionner sensiblement le long de l'un des axes focaux de la feuille réflectrice.

2. Capteur-stockeur selon la revendication 1, caractérisé en ce que les moyens de mise en forme sont constitués par une pluralité de dispositifs développables montés à intervalles réguliers le long du capteur-stockeur, selon des sections droites de ce dernier, et qui comprennent chacun une première paire de tiges rigides (20, 22) croisées et articulées par une de leurs extrémités (24, 26) sur la feuille réflectrice (12), au voisinage du plan de symétrie du capteur et une secondaire paire de tiges (34, 36) également croisées, dont deux extrémités (30, 32) sont articulées aux autres extrémités de la première paire tiges et dont les autres extrémités (38, 40) sont libres et s'appuient en contact glissant sur la feuille transparente (14), lesdites tiges formant ainsi un parallélogramme articulé à travers lequel passe le tube (10).

3. Capteur-stockeur selon l'une des revendications 1 et 2, caractérisé en ce que le tube (10) est réalisé en un complexe feuilleté favorisant la transmission de chaleur à travers la paroi, de l'extérieur vers l'intérieur et s'opposant à la déperdition de chaleur dans le sens inverse.

4. Capteur-stockeur selon la revendication 3, caractérisé en ce que ledit complexe feuilleté comprend une couche intérieure de polychlorure de vinyle, une couche en fibres de verre, et une couche extérieure de couleur noire, par exemple en polychlorure de vinyle noir.

5. Capteur-stockeur selon l'une des revendications précédentes, caractérisé en ce qu'il comprend une feuille réflectrice (40) en matière plastique souple et une feuille réflectrice en matière plastique souple et transparente (42) de mêmes dimensions et qui est assemblée à cette dernière le long de leurs bords longitudinaux respectifs (44, 46) et de lignes longitudinales (48, 50) qui définissent sur la feuille réflectrice et sur la feuille transparente des bandes longitudinales (52, 54, 56, 58, 60, 62) de mêmes dimensions, un tube (70, 72, 74) étant introduit entre chaque bande réflecteur et la bande transparente qui lui fait face, des moyens de mise en forme à tiges ou à ressorts étant introduits dans les capteurs-stockeurs contigus ainsi formés.

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A,D | FR-A-2 406 786 (PINAULDT) <br> * Page 1, ligne 13 - page 2, ligne 11; figures * | 1,4,5 | F 24 J 2/36 <br> F 24 J 2/14 <br> F 24 J 2/34 <br> F 24 J 2/48 |
| | --- | | |
| A,D | FR-A-1 319 144 (ETAT D'ISRAEL) <br> * Page 1, colonne 2, lignes 23-39; page 3, colonne 1, lignes 18-24; page 3, colonne 2, ligne 34 - page 4, colonne 1, ligne 39; figures 1-3 * | 1,3,4 | |
| | --- | | |
| A | FR-A-2 440 527 (CONSUNTRATOR) <br> * Page 4, lignes 18-26; page 16, ligne 3 - page 17, ligne 9; figures 1,11-14 * | 1,2 | |
| | --- | | DOMAINES TECHNIQUES RECHERCHES (Int. Cl.4) |
| A,D | US-A-4 051 834 (FLETCHER) <br> * Colonne 1, lignes 14-35; colonne 2, ligne 61 - colonne 4, ligne 17; colonne 4, lignes 52-61; colonne 5, lignes 19-45,58-66; colonne 6, lignes 32-35; figures 1-4,7,10,12,14A * | 1,5 | F 24 J |
| | --- | | |
| A | FR-A-2 553 872 (MAGLARAS) <br> * Page 4, ligne 14 - page 6, ligne 11; page 7, lignes 12-14; figures 1-4 * | 1,3,4 | |
| | ---              -/- | | |

Le présent rapport de recherche a été établi pour toutes les revendications

| Lieu de la recherche | Date d'achèvement de la recherche | Examinateur |
|---|---|---|
| LA HAYE | 23-12-1986 | KLEIN C. |

# RAPPORT DE RECHERCHE EUROPEENNE

| | DOCUMENTS CONSIDERES COMME PERTINENTS | | Page 2 |
|---|---|---|---|
| Catégorie | Citation du document avec indication, en cas de besoin, des parties pertinentes | Revendication concernée | CLASSEMENT DE LA DEMANDE (Int Cl.4) |
| A | US-A-4 203 420 (SCHOENFELDER) <br> * Colonne 1, ligne 60 - colonne 2, ligne 36; colonne 3, lignes 43-45; figures 1-5 * | 1,3,4 | |
| | --- | | |
| A | EP-A-0 030 193 (C.N.E.E.M.A.) <br> * Page 2, lignes 25-31; page 7, ligne 26 - page 8, ligne 17; page 10, lignes 18-26; page 11, ligne 31 - page 12, ligne 16; figures 1-3 * | 1 | |
| | --- | | |
| A | US-A-4 138 994 (SHIPLEY) <br> * Colonne 1, ligne 66 - colonne 2, ligne 51; figures * | 2 | |
| | --- | | |
| A | FR-A-2 401 389 (GUILLEM) <br> * Page 1, lignes 26-39; figures * | 2 | DOMAINES TECHNIQUES RECHERCHES (Int. Cl.4) |
| | --- | | |
| A | US-A-4 520 793 (HALL) <br> * Colonne 1, ligne 63 - colonne 3, ligne 23; figures * | 3,4 | |
| | --- | | |
| A | US-A-4 232 658 (GESSFORD) <br> * Colonne 3, ligne 34 - colonne 4, ligne 9; figures 3,4 * | 4 | |
| | --- | | |
| A | GB-A-2 089 024 (GENBEE) <br> * Page 1, ligne 122 - page 2, ligne 34; figures 1,2,6,8 * | 5 | |
| | --- -/- | | |

Le présent rapport de recherche a été établi pour toutes les revendications

| Lieu de la recherche | Date d'achèvement de la recherche | Examinateur |
|---|---|---|
| LA HAYE | 23-12-1986 | KLEIN C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

Page  3

| Catégorie | Citation du document avec indication, en cas de besoin. des parties pertinentes | Revendication concernée | CLASSEMENT DE LA DEMANDE (Int Cl.4) |
|---|---|---|---|
| A | FR-A-2 398 982  (ORRISON) | | |

-----

DOMAINES TECHNIQUES
RECHERCHES (Int. Cl.4)

Le présent rapport de recherche a été établi pour toutes les revendications

| Lieu de la recherche | Date d'achevement de la recherche | Examinateur |
|---|---|---|
| LA HAYE | 23-12-1986 | KLEIN C. |